# EUROPÄISCHE PATENTSCHRIFT

(11) **EP 1 379 559 B1**
(45) Veröffentlichungstag und Bekanntmachung des Hinweises auf die Patenterteilung: **28.02.2007**
(21) Anmeldenummer: 02727553.6
(22) Anmeldetag: 10.04.2002
(51) Int. Cl.: C08F 6/10, C08F 110/10

(54) **ABTRENNUNG NICHT UMGESETZTEN ISOBUTENS BEI DER POLYMERISATION VON ISOBUTEN**
SEPARATION OF ISOBUTENE NON-REACTED DURING POLYMERIZATION OF ISOBUTENE
SEPARATION D'ISOBUTENE NON TRANSFORME LORS DE LA POLYMERISATION D'ISOBUTENE

(30) Priorität: 11.04.2001 DE 10118181
(43) Veröffentlichungstag der Anmeldung: 14.01.2004
(73) Patentinhaber: BASF Aktiengesellschaft, 67056 Ludwigshafen (DE)
(72) Erfinder: AUER, Heinz, 68809 Neulussheim (DE); Kanne, Ulrich, Dr., 67133 Maxdorf (DE); De Vos, Andre, 2280 Grobbendonk (BE); Ciprian, Jürgen, Dr., 67071 Ludwigshafen (DE)
(74) Vertreter: Kinzebach, Werner
(86) Internationale Anmeldenummer: PCT/EP2002/003999
(87) Internationale Veröffentlichungsnummer: WO 2002/083745

(56) Entgegenhaltungen:
- US-A- 3 280 091
- US-A- 4 537 954
- US-A- 5 216 121

## Beschreibung

Die vorliegende Erfindung betrifft ein Verfahren zur Aufarbeitung eines flüssigen Reaktionsaustrags der kationischen Polymerisation von Isobuten, der im Wesentlichen aus Polyisobuten, nicht umgesetztem Isobuten und gegebenenfalls einem inerten Verdünnungsmittel besteht.

Hochmolekulare Polyisobutene mit Molekulargewichten bis zu mehreren 100000 Dalton sind seit langem bekannt und ihre Herstellung ist beispielsweise in H. Güterbock: Polyisobutylen und Mischpolymerisate, S. 77-104, Springer, Berlin 1959, beschrieben. Von diesen herkömmlichen Polyisobutenen sind die sogenannten hochreaktiven Polyisobutene zu unterscheiden, welche einen hohen Gehalt an endständigen Vinylidengruppierungen von vorzugsweise deutlich über 60 Mol-% haben. Hochreaktive Polyisobutene sind als Zwischenprodukte zur Herstellung von Additiven für Schmier- und Kraftstoffe begehrt.

Derartige hochreaktive Polyisobutene sind z. B. nach dem Verfahren der EP 0 628 575 durch kationische Polymerisation von Isobuten in flüssiger Phase mit Hilfe von Bortrifluorid und eines sekundären Alkohols bei Temperaturen von 0 °C bis -60 °C erhältlich.

Die älteren Patentanmeldungen DE 199 48 947.5, DE 199 52 031.3, DE 199 52 030.5, DE 100 28 585.6 und DE 100 35 298.7 betreffen Verbesserungen oder vorteilhafte Ausgestaltungen eines derartigen Verfahrens.

Nach Erreichen des gewünschten Molekulargewichts wird die Reaktion durch Deaktivierung des Polymerisationskatalysators abgebrochen. Vorzugsweise wird der Polymerisationskatalysator oder dessen Deaktivierungsprodukte durch Extraktion mit einer wässrigen Lösung entfernt. Anschließend wird das nicht umgesetzte Isobuten, gegebenenfalls zusammen mit einem Teil des inerten Verdünnungsmittels, abdestilliert, wobei das gebildete Polyisobuten und gegebenenfalls die Hauptmenge des inerten Verdünnungsmittels zurückbleibt. Bei dieser Destillation tritt allerdings das erhebliche Problem auf, dass ein voluminöser hartnäckiger Schaum entsteht. Die Schaumbildung führt unter Umständen dazu, dass die zur Trennung herangezogene Kolonne flutet und ihrer Trennaufgabe nicht mehr gerecht wird. Die Produktion muss unterbrochen bzw. die Produktionsgeschwindigkeit reduziert werden, bis der Schaum unter Einwirkung der Schwerkraft wieder zusammenfällt. Dadurch ist die Gesamtkapazität einer Produktionsanlage allerdings stark eingeschränkt.

Die Ursache der Schaumbildung ist nicht genau bekannt. Üblicherweise wird die Bildung von Schäumen bei amphiphilen Molekülen beobachtet. Polyisobuten und das gegebenenfalls verwendete Verdünnungsmittel verfügen allerdings nur über hydrophobe Gruppen, nicht jedoch über hydrophile Gruppen. Der Einsatz chemischer Entschäumer scheidet aus, da das Polyisobuten als Destillationsrückstand anfällt und der zugesetzte Entschäumer im Endprodukt verbleiben würde.

Der Erfindung liegt daher die Aufgabe zugrunde, ein Verfahren zur Aufarbeitung eines flüssigen Reaktionsaustrags der kationischen Polymerisation von Isobuten anzugeben, das die durch die Schaumbildung verursachten Probleme beim Abtrennen des nicht umgesetzten Isobutens vom Reaktionsaustrag vermeidet.

Erfindungsgemäß wird diese Aufgabe gelöst durch ein Verfahren zur Aufarbeitung eines flüssigen Reaktionsaustrags der kationischen Polymerisation von Isobuten, der im Wesentlichen aus Polyisobuten, nicht umgesetztem Isobuten und gegebenenfalls einem inerten Verdünnungsmittel besteht, bei dem man vom Reaktionsaustrag eine das nicht umgesetzte Isobuten enthaltende Dampfphase abtrennt, indem man
den Reaktionsaustrag erwärmt und in einen Entspannungsbehälter entspannt, wobei sich der Reaktionsaustrag infolge der Entspannung in eine das Polyisobuten enthaltende Flüssigphase und eine Dampfphase auftrennt; und
beim Abdampfen gebildeten Schaum gegen eine Prallfläche leitet oder in kreisende Strömung versetzt, so dass der Schaum in einen gasförmigen Anteil und einen flüssigen Anteil aufgetrennt wird.

Wird der flüssige Reaktionsaustrag bis zum Ausdampfen des nicht umgesetzten Isobutens erwärmt, so muss das Isobuten beim Übertritt in die Gasphase die Flüssig-Gas-Grenzfläche überwinden. Dabei kann sich um ein Gasbläschen ein dünnes Häutchen der Flüssigkeit legen. Besitzt die Flüssigkeit ein hohes Filmbildungsvermögen, so werden sehr beständige Schäume erhalten, die zu den oben erwähnten Problemen führen. Nach der Maßnahme a) des erfindungsgemäßen Verfahrens wird der Reaktionsaustrag erwärmt und in einen Entspannungsbehälter entspannt. Die sich bildende Dampfphase muss hierbei nicht die Flüssig-Gas-Grenzfläche überwinden, so dass nicht die Gefahr der Schaumbildung besteht.

Der Reaktionsaustrag, in dem der Polymerisationskatalysator deaktiviert worden ist und/oder aus dem der Polymerisationskatalysator oder seine Deaktivierungsprodukte vorzugsweise entfernt worden sind, wie dies im Einzelnen weiter unten beschrieben ist, wird, beispielsweise in einem Wärmetauscher, vorzugsweise auf eine Temperatur von 40 bis 200 °C, insbesondere 40 bis 140 °C, besonders bevorzugt 40 bis 120 °C erwärmt. Der Reaktionsaustrag steht dabei unter einem Druck, der in der Regel dem des Polymerisationssystems entspricht und z. B. 2 bis 30 bar, vorzugsweise 2 bis 20 bar, beträgt. Anschließend wird der erwärmte Reaktionsaustrag in einen Entspannungsbehälter entspannt, der unter einem Druck von im Allgemeinen 1 bis 10 bar, vorzugsweise 1 bis 8 bar, besonders bevorzugt 1 bis 5 bar, steht. Die Druckdifferenz der Entspannung beträgt vorzugsweise wenigstens 1 bar, insbesondere wenigstens 3 bar.

Infolge der Entspannung trennt sich der Reaktionsaustrag in einer das Polyisobuten und gegebenenfalls Verdünnungsmittel enthaltende Flüssigphase und eine Dampfphase auf, die die Hauptmenge des im Reaktionsaustrag enthaltenen Isobutens enthält. Vorzugsweise wird die Temperatur, auf die der Reaktionsaustrag vorerwärmt wird, und die Druckdifferenz der Entspannung so gewählt, dass die Dampfphase wenigstens 50 %, insbesondere wenigstens 70 % des im Reaktionsaustrags enthaltenen Isobutens enthält. Geeignete Kombinationen von Temperatur- und Druckdifferenz kann der Fachmann aufgrund der bekannten Werte der spezifischen Wärmekapazität von Polyisobuten, Isobuten und gegebenenfalls des mitverwendeten Verdünnungsmittels sowie der spezifischen Verdampfungsenthalpie von Isobuten ohne Weiteres abschätzen oder alternativ durch einfache Versuche ermitteln.

Die Gestalt des Entspannungsbehälters unterliegt keinen wesentlichen Beschränkungen. Vorzugsweise wird der erwärmte Reaktionsaustrag so in den Entspannungsbehälter eingeführt, dass beim Eintritt in den Behälter eine große Flüssigkeitsoberfläche erzeugt wird, die das Ausdampfen der Gasphase aus der Flüssigphase begünstigt. Hierzu hat es sich als vorteilhaft erwiesen, einen vorzugsweise länglichen, vertikal angeordneten Entspannungsbehälter mit kreisförmigem Querschnitt zu verwenden und den erwärmten Reaktionsaustrag tangential zur Wand des Entspannungsbehälters, vorzugsweise in einer Richtung senkrecht zur Längsachse des Entspannungsbehälters, einzuführen. Auf diese Weise strömt der Reaktionsaustrag entlang der Behälterwand und folgt deren Krümmung, wodurch der Reaktionsaustrag einen Drall erfährt und sich im Entspannungsbehälter in Spirallinien entlang des Umfangs der Behälterwand nach unten bewegt.

Bevorzugt verwendet man als Entspannungsbehälter eine Kolonne, wobei die Zufuhr des erwärmten Reaktionsaustrages seitlich in einen von Einbauten freien Bereich der Kolonne, vorzugsweise im Bereich der Kolonnenmitte oder im oberen Bereich der Kolonne, erfolgt. Geeigneterweise leitet man die sich bildende Flüssigphase über trennwirksame Einbauten im unteren Bereich der als Entspannungsbehälter verwendeten Kolonne, um eine möglichst große Phasengrenzfläche zu schaffen und das Ausdampfen der Gasphase zu vervollständigen. Als trennwirksame Einbauten zum Beispiel sind Glockenböden oder bevorzugt eine Füllkörperpackung geeignet.

Weiterhin wurde festgestellt, dass die Schaumbildung stark unterdrückt bzw. vermieden werden kann, wenn man die erhaltene Flüssigphase so erwärmt, dass pro m² Flüssigkeitsoberfläche nicht mehr als 900 m³/h, vorzugsweise nicht mehr als 500 m³/h, insbesondere nicht mehr als 300 m³/h und besonders bevorzugt nicht mehr als 100 m³/h ausdampfen. Bei den genannten Abdampfmengen ist die Wahrscheinlichkeit, dass Gasbläschen beim Passieren der Flüssig-Gas-Grenzfläche von einem Häutchen der Flüssigkeit eingeschlossen werden, gering bzw. spontan gebildeter Schaum fällt unter Einwirkung der Schwerkraft rasch zusammen. Die Behandlung des Reaktionsaustrags auf diese Weise erfordert allerdings Verdampfer mit großer Flüssigkeitsoberfläche bzw. beschränkt sich auf sehr niedrige Durchsätze. Vorzugsweise wird diese Maßnahme zur Vervollständigung des Abdampfens des nicht umgesetzten Isobutens aus der erhaltenen Flüssigphase herangezogen, aus der die Hauptmenge nicht umgesetzten Isobutens bereits durch Entspannung entfernt worden ist.

Die Abdampfmenge pro m² Flüssigkeitsoberfläche lässt sich besonders leicht bestimmen, wenn zum Erwärmen ein externer bzw. außenliegender Verdampfer herangezogen wird. Die zum Ausdampfen zur Verfügung stehende Flüssigkeitsoberfläche ist eine Kennzahl des jeweiligen Verdampfers. Die Abdampfmenge kann anhand der Leistungsaufnahme des Abdampfers und der spezifischen Verdampfungsenthalpie von Isobuten abgeschätzt werden. Alternativ kann die zur Verdampfung zur Verfügung stehende Flüssigkeitsoberfläche, z. B. bei eingebauten Verdampfern, anhand geometrischer Vermessung abgeschätzt werden.

Andererseits kann man das nicht umgesetzte Isobuten aus dem Reaktionsaustrag bzw. aus der erhaltenen Flüssigphase mit einer höheren Abdampfleistung austreiben und den dabei gebildeten Schaum in einen gasförmigen Anteil und einen flüssigen Anteil auftrennen, indem man ihn gegen eine Prallfläche leitet oder in kreisende Strömung versetzt. Wird der Schaum mit einer ausreichend hohen Geschwindigkeit gegen eine Prallfläche geleitet, werden die Mizellen des Schaums zusammengedrückt und zerstört, wodurch der Schaum in einen gasförmigen und einen flüssigen Anteil zerfällt. Wird der Schaum in eine kreisende Strömung versetzt, werden die Mizellen durch Einwirkung von Zentrifugalkräften, insbesondere im Kontakt mit einer Behälterwand, zerstört, wodurch der Schaum ebenfalls in einen gasförmigen und einen flüssigen Anteil zerfällt. Zweckmäßigerweise versetzt man den Schaum in eine kreisende Strömung, indem man ihn tangential in einen Behälter mit kreisförmigem Querschnitt einleitet. In einer bevorzugten Ausführungsform wird als Behälter mit kreisförmigem Querschnitt ein Nasszyklon verwendet. Dieser zeichnet sich dadurch aus, dass hohe Zentrifugalbeschleunigungen erreicht werden, die ein wirksames Auftrennen des Schaums in einen flüssigen Anteil und einen gasförmigen Anteil bewirken. Bei der Verwendung eines solchen Nasszyklons werden diese Zentrifugalkräfte durch die kinetische Energie der Strömung aufgebracht. Es hat sich als vorteilhaft erwiesen, dass der Schaum mit einer Geschwindigkeit von etwa 5 bis 30 m/s in den Behälter mit kreisförmigem Querschnitt bzw. den Nasszyklon eingeleitet wird. Alternativ kann man den Schaum auch durch Aufbringung mechanischer Energie in kreisende Strömung versetzen, beispielsweise durch rotierende Teller und dergleichen.

Eine besonders bevorzugte Ausführungsform des erfindungsgemäßen Verfahrens besteht darin, dass man
- einen Entspannungsbehälter mit einem oberen Kompartiment und einem unteren Kompartiment bereitstellt, die über einen Siphon miteinander verbunden sind;
- den erwärmten Reaktionsaustrag in das obere Kompartiment entspannt;
- die sich bildende Dampfphase aus dem oberen Kompartiment abzieht und die sich bildende Flüssigphase in das untere Kompartiment leitet;
- die im unteren Kompartiment befindliche Flüssigphase zum Abdampfen des restlichen Isobutens erwärmt;
- den sich bildenden Schaum aus dem unteren Kompartiment abzieht und gegen eine Prallfläche leitet oder in kreisende Strömung versetzt, so dass der Schaum in einen gasförmigen Anteil und einen flüssigen Anteil aufgetrennt wird, und
- den gasförmigen Anteil in das obere Kompartiment leitet und den flüssigen Anteil in das untere Kompartiment leitet.

Als Siphon ist ein S-förmiges Rohr geeignet, das das obere und das untere Kompartiment verbindet, oder ein vom oberen Kompartiment nach unten führender Rohrstutzen, der unterhalb einer Flüssigkeitsoberfläche der Flüssigphase endet. Der Siphon gestattet, dass die sich bei der Entspannung bildende Flüssigphase vom oberen Kompartiment in das untere Kompartiment gelangt, und verhindert, dass der beim Ausdampfen des restlichen Isobutens entstehende Schaum vom unteren Kompartiment in das obere Kompartiment gelangt.

Die nach dem erfindungsgemäßen Verfahren anfallende Flüssigphase wird in an sich bekannter Weise weiter aufgearbeitet, z. B. durch Destillation vom gegebenenfalls noch enthaltenen Verdünnungsmittel befreit.

Die kationische Polymerisation von Isobuten in Gegenwart eines Lewis-Säure-Katalysators kann kontinuierlich oder diskontinuierlich erfolgen, erfolgt jedoch vorzugsweise kontinuierlich. Verfahren zur kontinuierlichen Polymerisation in flüssiger organischer Phase sind an sich bekannt. Bei einem kontinuierlichen Verfahren wird kontinuierlich ein Teil der im Polymerisationsreaktor entstandenen Reaktionsmischung ausgetragen. Eine dem Austrag entsprechende Menge an Einsatzmaterialien, hier Isobuten bzw. Isobuten-haltiger Zulauf, wird dem Polymerisationsreaktor kontinuierlich zugeführt. Das Verhältnis von der im Polymerisationsreaktor befindlichen Stoffmenge zu der Menge, die ausgetragen wird, bestimmt sich durch das Umlauf/Zulauf-Verhältnis, das bei der kontinuierlichen Polymerisation von Isobuten zu Polyisobuten in der Regel im Bereich von 1000:1 bis 1:1, bevorzugt im Bereich von 500:1 bis 5:1 und insbesondere im Bereich von 200:1 bis 30:1 liegt. Die mittlere Verweildauer des zu polymerisierenden Isobutens im Polymerisationsreaktor kann fünf Sekunden bis mehrere Stunden betragen. Verweilzeiten von 1 bis 30 Minuten, insbesondere 2 bis 20 Minuten, sind besonders bevorzugt.

Die Polymerisation des Isobutens erfolgt in den üblichen Reaktoren, wie Rührkessel, Rohr-, Rohrbündel- und Schlaufenreaktoren, wobei Schlaufenreaktoren, d. h. Rohr(bündel)reaktoren mit Rührkesselcharakteristik, bevorzugt sind. Besonders günstig sind Rohrreaktoren mit Rohrquerschnitten, die in Teilbereichen zu Turbulenzen führen.

Die Polymerisation wird üblicherweise bei einer Reaktionstemperatur von -60 bis +40 °C, insbesondere -30 bis 0 °C, besonders bevorzugt -25 bis -5 °C, durchgeführt. Die Polymerisationswärme wird entsprechend mit Hilfe einer Kühlvorrichtung abgeführt. Diese kann beispielsweise mit flüssigem Ammoniak als Kühlmittel betrieben werden. Eine andere Möglichkeit, die Polymerisationswärme abzuführen, ist die Siedekühlung. Dabei wird die freiwerdende Wärme durch teilweises Verdampfen des Reaktionsgemischs, z. B. des Isobutens und/oder anderer leicht flüchtiger Bestandteile des Isobutenzulaufs oder eines leicht flüchtigen Verdünnungsmittels, abgeführt. Vorzugsweise arbeitet man unter isothermen Bedingungen, d. h. die Temperatur der flüssigen organischen Reaktionsphase im Polymerisationsreaktor hat einen stationären Wert und ändert sich während des Betriebs des Reaktors nicht oder nur in geringem Maße.

Die Konzentration des Isobutens in der flüssigen Reaktionsphase liegt in der Regel im Bereich von 0,2 bis 50 Gew.-%, vorzugsweise im Bereich von 0,5 bis 20 Gew.-%, bezogen auf die flüssige organische Phase.

Als Einsatzstoffe eignen sich sowohl Isobuten selbst als auch Isobuten-haltige C₄-Kohlenwasserstoffströme, beispielsweise C₄-Raffinate, C₄-Schnitte aus der Isobutan-Dehydrierung, C₄-Schnitte aus Steamcrackern, FCC-Crackern (fluid catalysed cracking), sofern sie weitgehend von darin enthaltenem 1,3-Butadien befreit sind. Geeignete C₄-Kohlenwasserstoffströme enthalten in der Regel weniger als 500 ppm, vorzugsweise weniger als 200 ppm, Butadien. Die Anwesenheit von 1-Buten, cis- und trans-2-Buten ist weitgehend unkritisch. Typischerweise liegt die Isobutenkonzentration in den C₄-Kohlenwasserstoffströmen im Bereich von 40 bis 60 Gew.-%. Bei Einsatz von C₄-Schnitten als Einsatzmaterial übernehmen die von Isobuten verschiedenen Kohlenwasserstoffe die Rolle eines inerten Verdünnungsmittels. Der Isobuten-haltige Zulauf kann geringe Mengen an Kontaminanten, wie Wasser, Carbonsäuren oder Mineralsäuren enthalten, ohne dass es zu kritischen Ausbeute- oder Selektivitätseinbußen kommt. Es ist zweckdienlich, eine Anreicherung dieser Verunreinigungen zu vermeiden, indem man solche Schadstoffe beispielsweise durch Adsorption an feste Adsorbentien, wie Aktivkohle, Molekularsiebe oder Ionenaustauscher, aus dem Isobuten-haltigen Zulauf entfernt.

Als Verdünnungsmittel sind solche Lösungsmittel oder Lösungsmittelgemische geeignet, die unter Reaktionsbedingungen gegenüber den eingesetzten Reagenzien inert sind. Geeignete Verdünnungsmittel sind beispielsweise gesättigte Kohlenwasserstoffe, wie Butan, Pentan, Hexan, Heptan, Octan, z. B. n-Hexan, i-Octan, Cyclopentan, halogenierte Kohlenwasserstoffe, wie Methylchlorid, Dichlormethan oder Trichlormethan, sowie Mischungen der vorgenannten Verdünnungsmittel, wovon n-Hexan besonders bevorzugt ist. Vorzugsweise werden die Verdünnungsmittel vor ihrem Einsatz von Verunreinigungen wie Wasser, Carbonsäuren oder Mineralsäuren befreit, beispielsweise durch Adsorption an feste Adsorbentien, wie Aktivkohle, Molekularsiebe oder Ionenaustauscher.

Es ist für die Abführung der Reaktionswärme günstig, bei großer Verdünnung, d. h. mit einem hohen Verdünnungsmittelanteil im Reaktionsgemisch zu arbeiten. Andererseits verringert ein hoher Verdünnungsmittelanteil die pro Reaktorvolumen erzielbare Menge an Polyisobuten und verschlechtert die Wirtschaftlichkeit des Verfahrens. In der Praxis wird man daher einen Kompromiss zwischen hoher Reaktorvolumenausnutzung und - für die Abführung der Reaktionswärme - ausreichend geringer Viskosität bei Reaktionstemperatur wählen. Die optimale Verdünnungsmittelmenge kann vom Fachmann in einfacher Weise bestimmt werden, indem er den Verdünnungsmittelanteil im Reaktionsgemisch bis knapp vor den Punkt vermindert, an dem die Reaktionswärme nicht mehr rasch genug abgeführt werden kann. Das Unterschreiten der optimalen Verdünnungsmittelmenge ist an einem Temperaturanstieg im Reaktor und gegebenenfalls einer beginnenden Verschlechterung der Produktqualität erkennbar.

Als Lewis-Säure-Katalysator ist Bortrifluorid, vorzugsweise in Kombination mit einem Cokatalysator, besonders bevorzugt. Bortrifluorid wird zweckmäßigerweise in Form von gasförmigem Bortrifluorid eingesetzt, wobei technisches, noch geringe Mengen Schwefeldioxid und SiF₄ enthaltendes, vorzugsweise aber hochreines Bortrifluorid mit einer Reinheit von etwa 99,5 Gew.-% verwendet werden kann.

Geeignete Cokatalysatoren sind in der Regel sauerstoffhaltige Verbindungen, die vorzugsweise wenigstens ein zweibindiges Sauerstoffatom enthalten. Geeignete sauerstoffhaltige Verbindungen sind neben Wasser organische Verbindungen bis zu 30 Kohlenstoffatomen. Beispiele hierfür sind C₁-C₃₀-Alkanole und -Cycloalkanole, C₂-C₁₀-Diole, C₁-C₂₀-Carbonsäuren, C₄-C₁₂-Carbonsäureanhydride sowie C₂-C₂₀-Dialkylether. Hierunter bevorzugt werden einwertige Alkanole mit 1 bis 20 Kohlenstoffatomen, insbesondere mit 1 bis 4 Kohlenstoffatomen, die gegebenenfalls zusammen mit den C₂-C₂₀-Dialkylethern eingesetzt werden können. Als Cokatalysator sind einwertige sekundäre C₃-C₂₀-Alkanole und tert-Butylether besonders bevorzugt. Beispielhaft seien genannt Isopropanol, 2-Butanol, sec-Pentanol, sec-Hexanol, sec-Heptanol, sec-Octanol und dergleichen. Besonders bevorzugt werden 2-Butanol, Isopropanol, Methyl-tert-butylether, Ethyl-tert-butylether und Isopropyl-tert-butylether verwendet.

Vorzugsweise beträgt das Molverhältnis von Bortrifluorid zu Cokatalysator 1:1 bis 1:10, insbesondere 1:1,1 bis 1:5 und besonders bevorzugt 1:1,2 bis 1:2,5. Das Bortrifluorid und der Cokatalysator können vorab unter Bildung eines Komplexes umgesetzt oder in situ im Reaktionsgemisch kombiniert werden.

Die Konzentration der Kombination von Bortrifluorid und Cokatalysator im Reaktor liegt in der Regel im Bereich von 0,005 bis 1 Gew.-%, bezogen auf die flüssige organische Phase, insbesondere im Bereich von 0,01 bis 0,7 Gew.-% und besonders bevorzugt im Bereich von 0,015 bis 0,5 Gew.-%.

Nach Erreichen des gewünschten Polymerisationsgrades wird der Katalysator abgetrennt und/oder deaktiviert und auf diese Weise die Polymerisation abgebrochen. Zur Katalysatordeaktivierung können Desaktivatoren, wie beispielsweise Wasser, Alkohole, Acetonitril, Ammoniak oder wässrige Lösungen von Mineralbasen oder Carbonaten, verwendet werden, die dem Reaktionsgemisch zugefügt werden.
Hierzu können auch angesäuerte wässrige Lösungen verwendet werden. Anstatt den Katalysator im Reaktionsgemisch quantitativ zu deaktivieren, kann man ihn entweder quantitativ aus dem Reaktionsgemisch abtrennen oder teilweise aus dem Reaktionsgemisch abtrennen und den restlichen Katalysator im Reaktionsgemisch deaktivieren. Mit Vorteil erfolgt die Katalysatorabtrennung gemäß der Beschreibung der WO 99/31151.

Zur Abtrennung des Katalysators aus dem Reaktionsgemisch empfiehlt es sich, zuvor die Isobutenkonzentration auf weniger als 2 Gew.-%, vorzugsweise weniger als 1 Gew.-% und insbesondere weniger als 0,5 Gew.-%, bezogen auf das Reaktionsgemisch, zu verringern. Zur Abtrennung des Katalysators verwendet man bevorzugt lösliche Bortrifluorid-Komplex-Katalysatoren mit begrenzter Löslichkeit im Reaktionsgemisch und/oder kühlt das Reaktionsgemisch auf Temperaturen von beispielsweise 5 bis 30 Kelvin unterhalb der Reaktionstemperatur, vorzugsweise 10 bis 20 Kelvin unterhalb der Reaktionstemperatur, ab.

Im weiteren Gang der Aufarbeitung wird der Reaktionsaustrag zweckmäßigerweise einer oder mehreren Extraktionen - üblicherweise mit Wasser - zur Entfernung von Restmengen an Katalysator unterzogen. Die nach der Extraktion erhaltene organische Phase ist als Einsatzmaterial für das erfindungsgemäße Verfahren besonders geeignet.

Das Isobutenpolymerisat weist in der Regel ein zahlenmittleres Molekulargewicht Mₙ von 500 bis 50000 und einen Gehalt an endständigen Vinylidengruppen von mehr als 60 Mol-%, insbesondere mehr als 80 Mol-% auf. Die Dispersität M_{w}/Mₙ beträgt vorzugsweise nicht mehr als 1,9, insbesondere nicht mehr als 1,8.

Die vorliegende Erfindung wird durch die beigefügte Figur näher veranschaulicht.

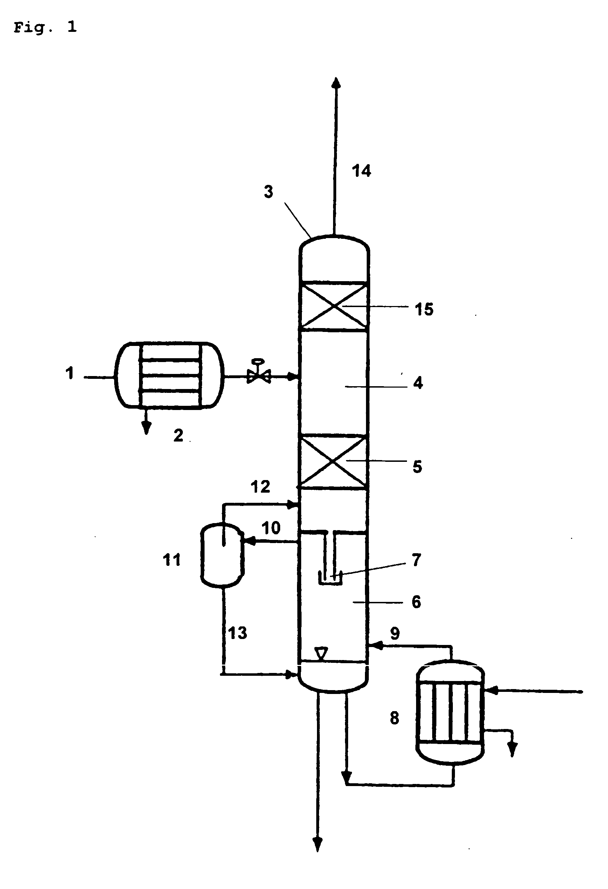

Fig. 1 zeigt schematisch eine zur Durchführung des erfindungsgemäßen Verfahrens geeignete Anlage. Der flüssige Reaktionsaustrag wird über die Leitung 1 und den Wärmetauscher 2 in das obere Kompartiment 4 eines Entspannungsbehälters 3 geleitet. Aufgrund der Entspannung trennt sich der Reaktionsaustrag in eine Dampfphase und eine Flüssigphase. Die Flüssigphase passiert die Füllkörperschüttung 5 und gelangt über den Siphon 7 in das untere Kompartiment 6 des Entspannungsbehälters 3. Die sich im Kompartiment 6 sammelnde Flüssigphase wird durch Umwälzung über den Aufheizer 8 erwärmt und über Leitung 9 zurück in das Kompartiment 6 geleitet. Der beim Ausdampfen des restlichen Isobutens entstehende Schaum wird über Leitung 10 einem Nasszyklon 11 zugeführt, wo der Schaum in einen gasförmigen Anteil, der über Leitung 12 in das Kompartiment 4 des Entspannungsbehälters 3 zurückgeführt wird, und einen flüssigen Anteil aufgetrennt wird, der über Leitung 13 in das untere Kompartiment 6 des Entspannungsbehälters 3 geführt wird. Die Gasphase wird über die Leitung 14 aus dem oberen Kompartiment 4 des Entspannungsbehälters 3 abgezogen. Der Tröpfchenabscheider 15 verhindert, dass Tröpfchen der Flüssigphase mitgerissen werden.

## Patentansprüche

1. Verfahren zur Aufarbeitung eines flüssigen Reaktionsaustrages der kationischen Polymerisation von Isobuten, der im Wesentlichen aus Polyisobuten, nicht umgesetztem Isobuten und gegebenenfalls einem inerten Verdünnungsmittel besteht, bei dem man vom Reaktionsaustrag eine das nicht umgesetzte Isobuten enthaltende Dampfphase abtrennt, indem man den Reaktionsaustrag erwärmt und in einen Entspannungsbehälter entspannt, wobei sich der Reaktionsaustrag infolge der Entspannung in eine das Polyisobuten enthaltende Flüssigphase und eine Dampfphase auftrennt; und beim Abdampfen gebildeten Schaum gegen eine Prallfläche leitet oder in kreisende Strömung versetzt, so dass der Schaum in einen gasförmigen Anteil und einen flüssigen Anteil aufgetrennt wird.

2. Verfahren nach Anspruch 1, wobei man die nach der Entspannung erhaltene Flüssigphase so erwärmt, dass pro Quadratmeter Flüssigkeitsoberfläche nicht mehr als 900 m³/h Dampf ausdampfen.

3. Verfahren nach Anspruch 1 oder 2, wobei man
- einen Entspannungsbehälter mit einem oberen Kompartiment und einem unteren Kompartiment bereitstellt, die über einen Siphon miteinander verbunden sind;
- den erwärmten Reaktionsaustrag in das obere Kompartiment entspannt;
- die sich bildende Dampfphase aus dem oberen Kompartiment abzieht und die sich bildende Flüssigphase in das untere Kompartiment leitet;
- die im unteren Kompartiment befindliche Flüssigphase zum Abdampfen des restlichen Isobutens erwärmt;
- den sich bildenden Schaum aus dem unteren Kompartiment abzieht und gegen eine Prallfläche leitet oder in kreisende Strömung versetzt, so dass der Schaum in einen gasförmigen Anteil und einen flüssigen Anteil aufgetrennt wird, und
- den gasförmigen Anteil in das obere Kompartiment leitet und den flüssigen Anteil in das untere Kompartiment leitet.

4. Verfahren nach Anspruch 2 oder 3, wobei man den erwärmten Reaktionsaustrag tangential in einen Entspannungsbehälter mit kreisförmigem Querschnitt einführt.

5. Verfahren nach einem der vorhergehenden Ansprüche, wobei man den Schaum in kreisende Strömung versetzt, indem man ihn tangential in einen Behälter mit kreisförmigem Querschnitt leitet.

6. Verfahren nach Anspruch 5, wobei man den Schaum mit einer Geschwindigkeit von 5 bis 30 m/s in den Behälter leitet.

7. Verfahren nach Anspruch 5 oder 6, wobei man als Behälter mit kreisförmigem Querschnitt einen Nasszyklon verwendet.

## Claims

1. A process for working up a liquid reaction discharge of the cationic polymerization of isobutene, which consists essentially of polyisobutene, unconverted isobutene and, if appropriate, an inert diluent, in which a vapor phase comprising the unconverted isobutene is separated from the reaction discharge by heating the reaction discharge and letting it down into a flash container, the reaction discharge separating into a polyisobutene-containing liquid phase and a vapor phase as a result of the flashing and passing foam formed during the evaporation toward an impact surface or causing it to flow along a circular path so that the foam is separated into a gaseous fraction and a liquid fraction.

2. The process according to claim 1, wherein the liquid phase obtained after the flashing is heated so that not more than 900 m³/h of vapor are expelled per square meter of liquid surface.

3. The process according to claim 1 or 2, wherein
- a flash container having an upper compartment and a lower compartment which are connected to one another via a siphon is provided;
- the heated reaction discharge is let down into the upper compartment;
- the resulting vapor phase is taken off from the upper compartment and the resulting liquid phase is passed into the lower compartment;
- the liquid phase present in the lower compartment is heated to evaporate the remaining isobutene;
- the resulting foam is taken off from the lower compartment and is passed toward an impact surface or caused to flow along a circular path so that the foam is separated into a gaseous fraction and a liquid fraction; and
- the gaseous fraction is passed into the upper compartment and the liquid fraction is passed into the lower compartment.

4. The process according to claim 2 or 3, wherein the heated reaction discharge is introduced tangentially into a flash container having a circular cross-section.

5. The process according to any of the preceding claims, wherein the foam is caused to flow along a circular path by passing it tangentially into a container having a circular cross-section.

6. The process according to claim 5, wherein the foam is passed at a velocity of from 5 to 30 m/s into the container.

7. The process according to claim 5 or 6, wherein a wet cyclone is used as the container having a circular cross-section.

## Revendications

1. Procédé de traitement d'une sortie réactionnelle liquide de la polymérisation cationique d'isobutène composée essentiellement de polyisobutène, d'isobutène non transformé et éventuellement d'un diluant inerte, dans lequel on sépare de la sortie réactionnelle une phase vapeur contenant l'isobutène non transformé en chauffant la sortie réactionnelle et en la dilatant dans un récipient de dilatation, la sortie réactionnelle consécutive à la dilatation étant séparée en une phase liquide contenant le polyisobutène et une phase vapeur; et conduit, lors de la séparation par évaporation, la mousse formée contre une surface d'impact ou la conduit en courant cyclique, de sorte que la mousse est séparée en une fraction gazeuse et une fraction liquide.

2. Procédé selon la revendication 1 dans lequel on chauffe la phase liquide obtenue après la dilatation de telle sorte que ne s'évaporent par mètre carré de surface liquide, que 900 m³/h de vapeur au maximum.

3. Procédé selon la revendication 1 ou 2, dans lequel
- on procure un récipient de dilatation muni d'un compartiment supérieur et d'un compartiment inférieur qui sont reliés ensemble par un siphon;
- on dilate la sortie réactionnelle chauffée dans le compartiment supérieur;
- on soutire la phase vapeur en formation du compartiment supérieur et on conduit la phase liquide en formation dans le compartiment inférieur;
- on chauffe la phase liquide se trouvant dans le compartiment inférieur pour la séparation par évaporation de l'isobutène résiduel;
- on soutire la mousse se formant du compartiment inférieur et on la conduit contre une surface d'impact ou on la conduit en courant cyclique de telle sorte que la mousse se sépare en une fraction gazeuse et une fraction liquide, et
- on conduit la fraction gazeuse dans le compartiment supérieur et la fraction liquide dans le compartiment inférieur.

4. Procédé selon la revendication 2 ou 3, dans lequel on introduit tangentiellement la sortie réactionnelle chauffée dans un récipient de dilatation de coupe circulaire.

5. Procédé selon l'une des revendications précédentes dans lequel on conduit la mousse en courant cyclique en la conduisant tangentiellement dans un récipient à coupe circulaire.

6. Procédé selon la revendication 5 dans lequel on conduit la mousse dans le récipient à une vitesse de 5 à 30 m/s.

7. Procédé selon la revendication 5 ou 6 dans lequel on utilise un hydrocyclone comme récipient à coupe circulaire.
